# EUROPEAN PATENT APPLICATION

(11) **EP 4 823 038 A1**
(43) Date of publication of application: **14.10.2026**
(21) Application number: 25169159.8
(22) Date of filing: 08.04.2025
(51) Int. Cl.: H04L 9/30, H04L 9/32

(54) **COMPUTER-IMPLEMENTED METHOD FOR AN EFFICIENT PROOF-OF-POSSESSION (POP) OF A PRIVATE CRYPTOGRAPHIC KEY OF A KEY ENCAPSULATION MECHANISM (KEM)**

(71) Applicant: Siemens Aktiengesellschaft, 80333 München (DE)
(72) Inventor: Brockhaus, Hendrik, 85579 Unterbiberg (DE); Railean, Alexandr, 80995 München (DE); Safieh, Malek, 81539 München (DE)
(74) Representative: Siemens Patent Attorneys

(57) **Abstract**

System, PoP-provider and computer-implemented method for an efficient proof-of-possession (PoP) of a private cryptographic key of a key encapsulation mechanism (KEM), comprising the steps:
- Receiving, by a PoP-provider (21, 31, 41), the KEM public key (PK) of a key pair consisting of a KEM public key (PK) and a KEM private key (SK) generated by the user device, from the user device (20, 30, 40),
- Generating, by the PoP-provider (21, 31, 41), a first secret (K1) and a ciphertext data structure (CT) by performing an KEM encapsulation operation using the KEM public key (PK),
- Generating, by the user device (20, 30, 40), a second secret (K2) by performing a KEM decapsulation operation using the KEM private key (SK) and the cipher-text data (CT) received from the PoP-provider (21, 31, 41),
- Confirming proof-of-possession of the KEM private key (SK) in the user device (20, 30, 40), by the PoP-evaluator (22, 32, 42), if the second secret (K2) generated by the user device (20, 30, 40) corresponds with the first secret (K1) generated by the PoP-provider (21, 31, 41).

## Description

### Field of the Invention

The present disclosure relates to a cryptographic system, a proof-of-possession (PoP)-provider and a computer-implemented method for performing an efficient proof-of-possession (PoP) of a private cryptographic key of a key encapsulation mechanism (KEM) requested by a proof-of-possession (PoP)-evaluator.

### Background

Public key certificates are a core building block of a public key infrastructure (PKI). Each entity in a PKI owns a key pair consisting of a public key, known to everyone, and a corresponding private key, known only to this entity. In a certificate, a trusted third party confirms that an entity can be identified by an identifier, e.g., an IP address, a URL or an email address, to gain trust in its public key. As part of authentication, the entity uses its private key, and a relying party can verify this using the public key in the certificate.

To establish a secure channel between two entities in communication systems, such a combination of public and private keys can be used to "encapsulate" a shared key. This shared key is then used to protect the data that is passed between both entities. A cryptographic algorithm for the process of "encapsulating" a shared key is known as key encapsulation mechanism (KEM). A key pair used for this purpose called KEM key pair.

Key encapsulation mechanisms are gaining more importance, due to the just shortly published standards for key encapsulation mechanisms (KEMs), which could replace asymmetric encryption schemes and Diffie-Hellman key exchange, for the post-quantum cryptographic (PQC) domain. It is also known that KEMs perform better than other asymmetric cryptographic algorithms, e.g., regarding computational effort and key sizes compared with digital signatures in the PQC domain.

Public key certificates are typically issued and signed by a certification authority (certificate authority). When the certificate authority receives a certificate signing request (CSR) from an entity, it typically verifies that the entity is in possession of the private key corresponding to the public key in the CSR. This process is known as Proof-of-Possession (PoP) or Proof-of-Private-Key-Possession. For instance, in the case of digital signature public keys, a PoP for the signature private key can be reached as follows: The requester must provide a proof that its identity matches the identity in the CSR and sign the CSR with the private key that corresponds to the public key contained in the CSR. The certification authority receives the CSR, verifies the Proof-of-Identity (Pol), matches the identity with the requested identity in the CSR and verifies the signature with the public key in the CSR. Then the proof that the entity named in the CSR holds the corresponding private key is achieved successfully. If the proof fails, then the certification authority refuses to issue a certificate for the public key in this CSR.

This approach is not possible with a KEM key, because a key encapsulation mechanism cannot be used to generate signatures in such a way. State-of-the-art solutions for a KEM proof-of-possession PoP introduce much more additional effort to the certification authority regarding increased number of interactions with the certification authority and computational complexity. On the other hand, the certification authority is a very important and security-critical entity in a PKI. It needs to be available and operated on a very high security level, as it is a kind of hub in the security architecture of an infrastructure.

This holds not only for proof-of-possession in a certificate request procedure but also for other procedures, which require a proof-of-possession to verify that a user sending the KEM public key is in possession of the corresponding KEM private key, e.g. in identification and access management procedures.

Therefore, it is the object of the present application to reduce the effort for performing a proof-of-possession in a PoP-evaluating entity.

### Brief Summary of the Invention

This object is solved by the features of the independent claims. The dependent claims contain further developments of the invention.

A first aspect concerns a computer-implemented method for an efficient proof-of-possession of a private cryptographic key of a key encapsulation mechanism (KEM), comprising the following steps:
Receiving, by a PoP-provider, the KEM public key of a key pair consisting of a KEM public key and a KEM private key generated by the user device, from the user device.
Generating, by the PoP-provider, a first secret and a ciphertext data structure by performing an KEM encapsulation operation using the KEM public key.
Generating, by the user device, a second secret by performing a KEM decapsulation operation using the KEM private key and the ciphertext data received from the PoP-provider.
Confirming proof-of-possession of the KEM private key in the user device, by the PoP-evaluator, if the second secret generated by the user device corresponds with the first secret generated by the PoP-provider.

Throughout this document the expression "PoP" alone or in combination as PoP-provider or PoP-evaluator is used as synonym for "proof-of-possession". The expression "KEM" alone or in combination as KEM key is used as synonym for "key encapsulation mechanism".

A novel entity called PoP-provider is introduced that cooperates with the PoP-evaluator and perform significant parts of the proof-of possession evaluation, e.g., for a certification request procedure when applying the key encapsulation mechanism for KEM. The PoP-provider significantly reduces the effort for the PoP-evaluator, e.g., a certification authority and increases its availability, and hence the efficiency of the whole PKI.

A second aspect concerns a system comprising a PoP-provider and a PoP-evaluator, each of them comprising at least one processor, which are configured to perform the method steps of the above-mentioned computer-implemented method.

The system provides proof-of-possession evaluation to an extended number of users as major parts of the evaluation process are provided by the PoP-provider and takes off tasks from the PoP-evaluator itself. Several PoP-providers can be connected to one PoP-evaluator which flexibly extends the capacity of the system. Similarly, several PoP-evaluators can be connected to a PoP-provider. Thus, the several PoP-evaluators benefit from one PoP-provider.

A third aspect concerns a PoP-provider comprising at least one processor configured to perform the steps:
- Receiving, from the user device, the KEM public key of a key pair consisting of a KEM public key and a KEM private key generated by the user device,
- Generating a first secret and a ciphertext data structure by performing an KEM encapsulation operation using the KEM public key as input,
- Transferring the first secret to the PoP-evaluator or a modified first secret via the user device to the PoP-evaluator and transferring the ciphertext data structure to the user device.

The PoP-provider performs a subset of operations required for the proof-of-possession of the KEM private key in the user device, which uses the corresponding KEM public key, e.g. in a certification request procedure or an access and identity management procedure.

A fourth aspect concerns a computer-implemented cryptographic method comprising the step of proof of possession performed according to the above-described method.

This provides an efficient performance of the cryptographic method using a key encapsulation mechanism.

A fifth aspect concerns a computer program product comprising instructions which, when the program is executed by at least one computer, cause the at least one computer to carry out the method of claim

A sixth aspect concerns a computer-readable medium having stored there on the computer program product.

### Description of Embodiments

In an embodiment a proof-of-identity (Pol) is performed by checking an identity of the user device in the PoP-provider, when the identity is sent by the user device preferably together with the public KEM key.

This allows the PoP-Provider to verify the identity (Pol) in addition to the private key possession, which further reduces the effort for the certificate authority.

In a further embodiment the second secret is transferred confidentiality protected and preferably integrity protected from the user device to the PoP-evaluator.

This ensures that the second secret which is a basic parameter for the proof-of-possession can be trusted.

In a further embodiment the first secret and the KEM public key are transferred from the PoP-provider to the PoP-evaluator, wherein the first secret is transferred via a confidentiality protected and preferably integrity protected communication, and wherein the KEM public key is transferred via an integrity protected and preferably confidentiality protected communication.

This embodiment does not require further operations on the secrets performed by the PoP-evaluator and enables the PoP-evaluator to compare the first secret with the second secret as such. This further optimizes the processing effort of the PoP-evaluator.

In a further embodiment the first secret is stored confidentiality protected and preferably integrity protected and the KEM public key is stored integrity protected and preferably confidentiality protected by the PoP-evaluator.

This enables identifying any change in the content of the stored first secret and KEM public key and ensures the trust in them.

In a further embodiment a modified first secret is generated by performing a one-way-function on the first secret by the PoP-provider, and the modified first secret and the KEM public key are transferred from the PoP-provider to the PoP-evaluator via an integrity protected communication and prefer-ably confidentiality protected communication.

In this embodiment the first secret cannot be determined from the modified first secret, which reduces the protection measures for transferring it to the PoP-evaluator. Lower protection measures reduce the processing effort in the PoP-evaluator.

In a further embodiment the modified first secret is signed by the PoP-provider and transferred from the PoP-provider via the user device to the PoP-evaluator.

In this embodiment, no direct connection is required between the PoP-provider and the PoP-evaluator. The reduces the number of entities communicating directly with the PoP-evaluator and thus reducing possible points of attack. This facilitates keeping a high security level of the PoP-evaluator. Additionally, it increases the availability of the PoP-evaluator for other entities in the system.

In a further embodiment the KEM public key (PK) is attached to the modified first secret (HK1).

This reduces additionally the interactions with the PoP-evaluator, which simplifies the requirements for the PoP-evaluator to be always available for PoP purpose and increases PKI efficiency. Additionally, this reduces the processing in the user device, as the KEM public key and the modified first secret are transferred in one message in one established communication to the PoP-evaluator.

### Brief description of the drawings

The invention will be explained in more detail by reference to accompanying figures. Similar objects will be marked by the same reference signs.
- Figure 1: illustrates an embodiment of the inventive method by a flow chart.
- Figure 2: schematically illustrates a first detailed embodiment of an inventive method by a message flow.
- Figure 3: schematically illustrates a second embodiment of an inventive method by a message flow.
- Figure 4: schematically illustrates an embodiment of the inventive system comprising an embodiment of the inventive PoP-provider.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements, as long as this is done in a sufficiently secure way. A connection or a coupling of elements or components or nodes can for example be implemented by a wire-based, a wireless connection and/or a combination of a wire-based and a wireless connection.

Functional units can be implemented by dedicated hardware, e.g., processor, by firmware or by software, and/or by a combination of dedicated hardware and firmware and software. It is further noted that each functional unit described for an apparatus can perform a functional step of the related method and vice versa.

### Background

A Key Encapsulation Mechanisms, further on named KEM, consists of three operations:
Generate() -> pk, sk: for generating a key-pair consisting of a public key pk and a private key sk. This procedure is randomized, so when Generate() is called repeatedly, it will almost certainly return a different and unique pair (pk, sk).
Encaps(pk) -> k, ct: Given a public key pk, this creates a shared secret k, a corresponding ciphertext ct, and returns both values.
Decaps(sk, ct) -> k: Given a private key sk and a ciphertext ct, obtained with Encaps() and the private key sk corresponding to pk, this procedure returns k.

Each Encaps(pk) operation typically results in a new secret k and a corresponding ciphertext ct. Only using the corresponding private key sk, the Encaps(sk,ct) operation can compute the same secret k from the ciphertext ct. Furthermore, note that Encaps(pk) operation is often used to derive a shared secret ss, instead of secret k. Consequently, a Key Derivation Function (KDF) is used to derive a cryptographic key k (or multiple keys) from ss. The same holds from the Decaps(sk, ct) operation, i.e., it results in a ss, and using a KDF a shared key k (or multiple keys) can be derived from it.

Encaps() and Decaps() output a secret. Depending on the used algorithm, this secret could be a cryptographic key or simply a secret. A secret is not necessarily suitable for as a cryptographic key to be used by a cryptographic function. To make this possible, a KDF is typically used, which may also generate multiple keys from one secret.

To establish an (unauthenticated) encrypted channel with two communication entities, e.g., Bob and, Alice executes Generate() to generate a KEM key pair, keeps her private key sk and sends her public key pk to Bob, in an authenticated manner proving Alice's identity. Bob calls Encaps(pk) to obtain ct and k. Then he sends ct back to Alice. Alice executes Decaps(sk, ct) to obtain k from ct, which is only possible for Alice having the corresponding private key sk. Now Alice and Bob both know k, they can derive a shared symmetric key from it using a Key Derivation Function (KDF) and can use it to protect messages using some symmetric (and authenticated) encryption scheme such as AES-GCM. The authentication of Alice by Bob typically relays on the underlying PKI and a public key certificate for the KEM public key of Alice, that can be verified by Bob.

Gaining trust in a public key of communication partners is a fundamental requirement for establishing secure channels. Practically, multiple methods can be used to gain such a trust. For example, the trust in the public key of the communication partner can be provided by securely pre-storing the public key (integrity protected) in a trusted environment. Also, it is possible to achieve this trust based on a pre-shared secret using a symmetric tag computation, e.g., with an HMAC or and authenticated encryption algorithm, e.g., AES-GCM. Alternatively, this can be achieved by providing a public key certificate for the corresponding public key based on some PKI and a Root-of-Trust (pre-stored root-certificate authority public key). For example, a certificate for the public key of a communication partner expresses its authority to act as required, e.g., the certificate authority issuing the certificate and asserting a related keyPurpose OID id-kp-cmcRA in the Extended Key Usage extension. Such concepts are applied for signature public keys. Generally, they are also suitable for KEM public keys and can be used for the proposed invention.

A channel, a communication and a connection is used synonymously in this document in the meaning of a comprising functionality and means to convey data between two communication partners over a physical medium.

### Description of Examples

The described approach introduces a novel entity called PoP-Provider to simplify the process of proof of KEM private key possession PoP and, preferably, a Proof-of-Identity (POI), towards a PoP-evaluator. The PoP-evaluator can be a certification authority of a private key infrastructure PKI. The described approach also describes protocols, i.e., a message flow, that demonstrate how the PoP-Provider can assist the PoP-evaluator, e.g., the certification authority, in the proof of private key possession by the requester of a certificate, here a user device. Once the proof of private key SK possession is ensured by the PoP-evaluator, a KEM public key certificate is issued.

The method mainly involves three entities, the user device, the PoP-provider and the PoP-evaluator.

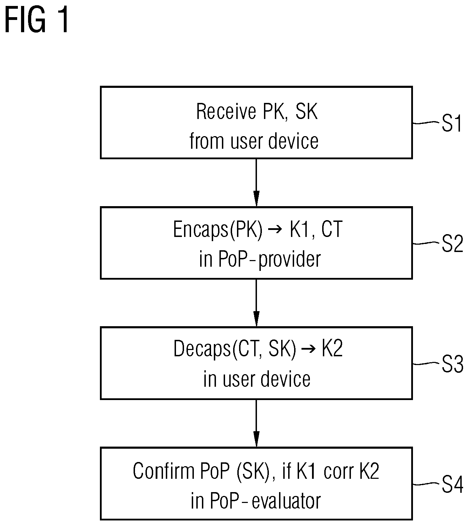

Fig. 1 depicts an embodiment of a computer-implemented method for performing an efficient proof-of-possession PoP of a private cryptographic key pk of a key encapsulation mechanism KEM.

In a first step S1 a PoP-provider receives from the user device the KEM public key PK of a key pair consisting of a KEM public key PK and a KEM private key SK generated by the user device. In step S2, the PoP-provider generates a first secret K1 and a ciphertext data structure CT by performing an KEM encapsulation operation using the KEM public key PK. Now the user device generates a second secret K2 by performing a KEM decapsulation operation on the KEM private key SK and the ciphertext data CT received from the PoP-provider, see step S3. The proof-of-possession of the KEM private key SK in the user device is confirmed by the PoP-evaluator, if the second secret K2 generated by the user device A corresponds with the first secret K1 generated by the PoP-provider, see step S4.

The second secret K2 is transferred confidentiality protected and/or integrity protected from the user device to the PoP-evaluator.

The KEM public key PK and the first secret K1 are transferred from the PoP-provider to the PoP-evaluator. The first secret K1 is transferred via a confidentiality protected and preferably integrity protected communication from the user device to the PoP-evaluator. The KEM public key is transferred via an integrity protected communication and preferably confidentiality protected communication from the user device to the PoP-evaluator.

In a first embodiment the transfer of the KEM public key PK and the first secret K1 is implemented by sending the KEM public key PK and the first secret K1 from the PoP-provider via the user device to the PoP-evaluator. In this case the confidentiality protected and/or integrity protected transfer is realized by modifying the first secret K1 by a one-time-function resulting in a modified first secret HK1, signing the modified first secret HK1 and the KEM public key PK with a signature key of the PoP-provider, and transmitting them transparently via the user device to the PoP evaluator. In this case, no direct connection has to be established from the PoP-provider to the PoP-evaluator. This optimizes the security of the PoP-evaluator and the certification authority as no additional communication partner, i.e., the PoP-provider has access to the PoP-evaluator and the certification authority.

In the first embodiment the PoP-evaluator generates a modified second secret HK2 by performing the same one-way-function as used by the PoP-provider on the received second secret K2. The second secret K2 generated by the user device A corresponds with the first secret K1 generated by the PoP-provider only if the first modified secret HK1 corresponds to the second modified secret HK2. If this is the case proof-of-possession is confirmed by the PoP-evaluator.

In a second embodiment, the KEM public key PK and the first secret K1 is sent directly from the PoP-provider to the PoP-evaluator via a confidentiality protected and/or integrity protected communication connection. The first secret K1 and the KEM public key PK are stored confidentiality protected and/or integrity protected by the PoP-evaluator. The KEM public key PK and the second secret K2 generated by the user are sent from the user device to the PoP-evaluator. At least the second secret K2 is transferred via a confidentiality protected and/or integrity protected communication. In this embodiment the first secret K1 can be compared directly with the second secret K2 and proof-of-possession is confirmed, if the first secret K1 corresponds to the second secret K2.

In the second embodiment the PoP-evaluator requires additional processing capacity for establishing the secure communication connection to the PoP-provider and protection means to secure the additional access by the PoP-provider and to provide secure storage of the KEM public key PK and first secret K1. On the other side the PoP-evaluator saves procession capacity as neither a verification of the signature of the KEM public key and first secret is required, nor the one-way-function has to be performed on the second secret K2.

The above-described method for performing the proof-of-possession is applied for cryptographic methods like a certification request procedure or as part of an identity and access management procedure. For such procedures a proof-of-identity of the user device has to be evaluated to confirm, that the identity belongs to the user device. An identity of the user device or an identity of a user assigned to the user device is sent by the user device preferably together with the Public KEM key PK. This so-called proof-of-identity is performed by checking the identity of the user device in the PoP-provider. This enables the PoP-provider to perform some binding of the KEM public key PK to the identity. It also allows the PoP-provider to verify the identity (Pol) in addition to the KEM private key possession PoP, which further reduces the effort for the PoP-evaluator or rather the certification authority.

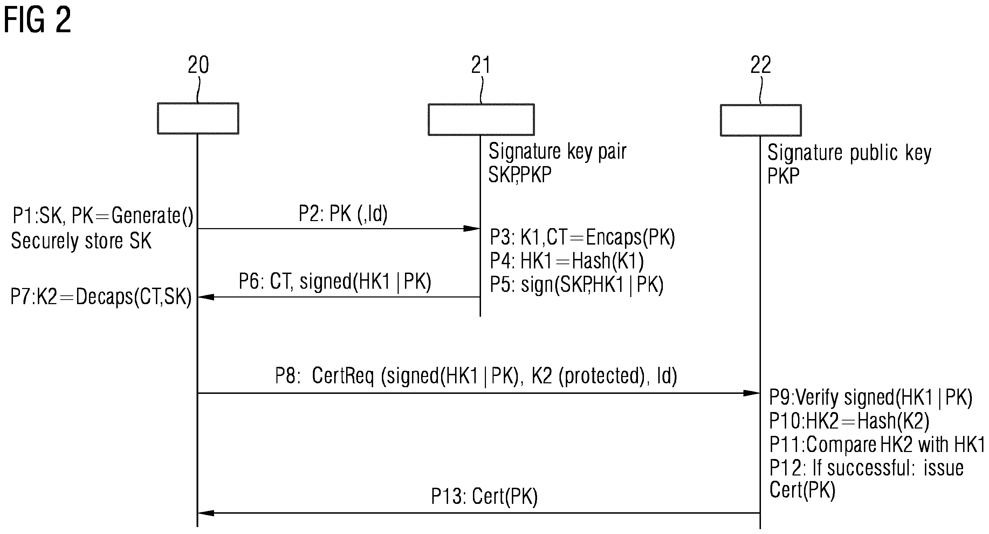

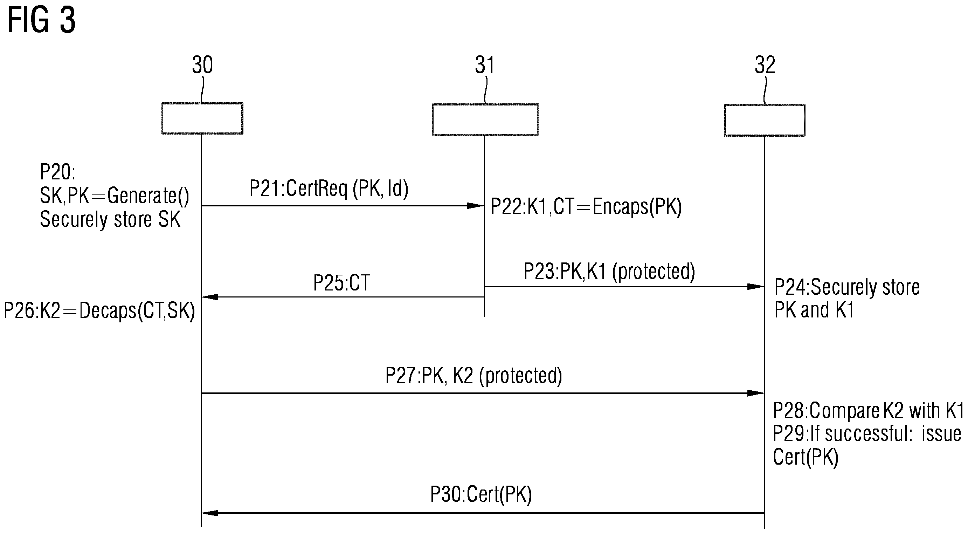

Fig. 2 and Fig. 3 show message flows of a first and a second embodiment of a proof-of-possession, performed as part of a certification request. When the certificate authority receives a certificate signing request (CSR) message from an entity, it typically verifies that the entity is in possession of the private key corresponding to the public key in the certificate signing request.

The message flow, synonymously called protocol, of the first embodiment involves three entities, a user device 20, PoP-provider 21 and PoP-evaluator 22. In general, the user device 20 can be any end-entity, client, computer, server, embedded device, and the like. The user device 20 wants to obtain a KEM public key certificate from a certification authority. The PoP-evaluator 22 is responsible to prove the possession of the KEM private key SK corresponding to the KEM public key PK. The PoP-evaluator 22 is preferably integrated in the certification authority but can also be implemented as a separate entity providing a confirmation of the proof-of-possession from the PoP-evaluator 22 to the certificate authority. In this case, the security requirements of the certificate authority have to be fulfilled also by the PoP-evaluator 21 and the connection to the certificate authority. In the following, it is assumed that the PoP-evaluator 22 is integrated in the certification authority. When referring to the PoP-evaluator 22 it is meant that the certificate authority and its functions are included.

The certificate authority is responsible for issuing the KEM public key certificate Cert for the user device 20. The PoP-provider 21 is responsible to prove the possession of the KEM private key SK, corresponding to the KEM public key PK from the user device 20, which needs to be certified by the certificate authority.

For the process of issuing a certificate some registration authorities are often involved as an entity that is possibly separate from the certification authority. This distinction does not matter in the present context.

Following requirements should be available for these entities:
The user device 20 trusts a signature public key of the PoP-evaluator. The user device 20 generates a KEM key pair SK, PK, to perform all needed KEM operation and signature validations as well. Signing operations of the user device 20 are not needed.

The PoP-provider 21 trusts a signature public key PKP of the PoP-evaluator 21, own a signature key pair SKP, PKP, and have the capability to perform all needed KEM and signature operations including signing operations.

The PoP-evaluator 22 trusts the signature public key PKP of the PoP-provider 21 and has the capability to perform all needed KEM and signature operations including signing operations. Gaining trust in a signature public key PKP is state-of-the-art, and it is not in scope of this invention.

In Figure 2, it is only considered mandatory that the PoP-evaluator 22 trusts the signature public key PKP of the PoP-provider 21.

First, the user device 20 generates a KEM key pair SK, PK and stores the resulting KEM private key SK in a confidentiality and preferably integrity protected way, see P1. Then in P2, the user device 20 sends the corresponding public key PK to the PoP-provider 21. A respective message is denoted as a PoP-request from the user device 20 to the PoP-provider 21, since user device 20 expects the PoP-provider 21 to perform some computations that are needed for the proof-of-possession during the certificate issuance by the certification authority later.

The PoP-Provider 21 receives the KEM public key PK of user device 20. The PoP-Provider 21 encapsulates PK, which results in a ciphertext CT and a first secret K1, see P3. The PoP-Provider 21 executes a one-time-function, denoted as P4: Hash(K1), and obtains a modified first secret HK1. The one-time-function is for instance a hash function, preferably a cryptographic hash function that is secure against post-quantum attacks, like SHA3-512.

Then the PoP-provider 21 signs the first modified secret HK1 with the private signature key SKP and transfers it together with the ciphertext CT to the user device 20. In a preferred embodiment the PoP-provider 21 attaches the first modified secret HK1 to the KEM public key PK of user device 20 and signs them with the signature private key SKP, see P5. This is denoted as sign(SKP,HKIPK). Finally, the PoP-provider 21 forwards the signed first modified secret HK1 attached to the PK, as well as the resulting ciphertext CT to user device 20, see P6. This message can be called as "PoP-response". The PoP-response is only optionally required to be protected, since the signed concatenation of the first modified secret HK1 and KEM public key, i.e., signed(HK1|PK), is integrity protected by the signature and the ciphertext CT can be decapsulated only by user device 20 having the corresponding KEM private key SK.

User device 20 receives the PoP-response P6 from the PoP-provider 21. Next, the user device 20 decapsulates the received ciphertext CT using the KEM private key SK to obtain the second secret K2, see P7. Note that only user device 20 is able to perform this computation using the corresponding KEM private key SK, because and thus, only user device 20can obtain a second secret K2 corresponding to the first secret K1. This is a fundamental idea for confirming the Proof-of-Possession.

Optionally, user device 20 performs some checks on the response signed (HK|PK), i.e., it checks if the KEM public key PK in the response is correct and/or performs the one-time function resulting in a second modified secret HK2 and compares it with HK1. Then, the user device 20 securely stores the resulting second secret K2 and the received signed concatenation signed(HK|PK). These values are needed later to prove to the PoP-evaluator 22 that the user device 20 is actually in the possession of the KEM private key SK, i.e., by providing K2 equals K1.

Finally, user device 20 requests a certificate for the KEM public key PK from the certificate authority, see P8, comprising the second secret K2 issued after a successful decapsulation by user device 20 using SK, the KEM public key PK and first secret HK signed by the PoP-Provider 21. An additional protection of the signed concatenation signed(HK|PK) is not required, because both require integrity only-protection and this is already provided by the signature provided by the PoP-Provider 21. However, the second secret K2 needs to be confidentiality and preferably integrity protected. For the protection, user device 20 establishes a secure channel to the PoP-evaluator 21 and sends the second secret K2 and the signed concatenation signed(HK|PK). Optionally the KEM public key PK is included. The certificate authority, as named here, comprises the PoP-evaluator 22.

The PoP-evaluator 22 of the certificate authority respectively receive the information and starts by verifying the signature over the concatenation (HK|PK) using the PoP-Provider's 21 public signature key PKP, which is trusted by the PoP-evaluator 22, see P9. If this fails, the PoP-evaluator 22 rejects the certification request. Otherwise, the PoP-evaluator 22 proceeds by hashing the received second secret K2 which results in the modified second secret HK2, see P10. If the KEM public key PK is sent from user device 20, it is additionally compared with KEM public key PK signed from the PoP-Provider 21.

Then, the PoP-evaluator 22 compares the received and signed first modified secret HK1 with the computed second modified secret HK2, see P11. Please note that the second modified secret HK2 can equal the first modified secret HK1, only if the second secret K2, resulting from the decapsulation by user device 20 using the corresponding KEM private key SK, equals the first secret K1. By a match, the PoP-evaluator 22 ensures that user device 20 possesses the corresponding KEM private key SK, see P12.

Hence, if this comparison results in a mismatch, the certificate authority rejects the certification request. Otherwise, the certificate authority is sure that the user device 20 is actually in the possession of the KEM private key SK, the certificate authority generates a KEM public key certificate for the KEM public key PK, signs it, and sends it back to the user device 20, see P13. Optionally the KEM public key certificate is transmitted over the previously established secure channel.

The first embodiment show in Fig.2 focuses on reducing the interactions with the PoP-evaluator 22 and the certificate authority respectively as much as possible using the PoP-provider 21, to achieve a proof-of-possession for a certificate issuance. Reducing the interactions with the PoP-evaluator simplifies the requirements for the certificate authority, i.e., being always available for PoP purpose, and increases PKI efficiency.

The second embodiment shown in Fig.3 comprises a user device 30, a PoP-provider 31 and a PoP-evaluator 32 combined or assigned to the certificate authority or respective entity in an identity and access management procedure. In terms of comparability the proof-of-possession is described as being part of a certification request. The second embodiment aims on reducing the overall computational complexity on the costs of accepting additional interactions with a PoP-evaluator 32 and certificate authority respectively and other relevant aspects, like the Proof-of-Identity.

In an variant, after receiving the concatenation (HK1|PK) from the PoP-provider 21, user device 20 can additionally attach its KEM public key PK to a certificate request and send it to the PoP-evaluator 22, e.g., as PK, signed(HK|PK), K2 (protected) in Fig. 2. This enables the PoP-evaluator 22 to check if the KEM public key PK is the same one like received from the PoP-provider 21.

In Fig.3 the user device 30 requests a certificate, the PoP-provider 31 is responsible to take the effort from the PoP-evaluator 32, i.e., from the certificate authority, to prove the possession of the corresponding KEM private key SK by the user device 30 and the certificate authority which issues a certificate. As shown in Fig.3, the PoP-provider 31 directly interacts with the PoP-evaluator 32.

The steps of the second embodiment are described in more details as follows:
The user device 30 generates a KEM key pair comprising KEM private key SK, and KEM public key PK and securely stores the KEM private key SK, see P20. The user device 30 forwards KEM public key PK to the PoP-provider 31, see P21.

The PoP-provider 31 receives the KEM public key PK and encapsulates the KEM public key PK, which results in a first secret K1 and a ciphertext CT, see P22. The PoP-provider 31 establishes a secure channel to the PoP-evaluator 32 and forwards the KEM public key PK and the first secret K1 to the PoP-evaluator 32, see P23. The KEM public key PK is transmitted integrity protected, and the secret K is transmitted confidentiality and preferably integrity protected. The PoP-evaluator 32 store these the KEM public key PK and the first secret K1 securely, see P24, which are needed for the proof of the possession of the KEM private key SK of the user device 30 later. Additionally, the PoP-provider 31 sends the resulting ciphertext CT to the user device 30, see P25.

In a variant, the PoP-provider performs a one-way-function on the first secret K1 resulting in a modified first secret HK1. This reduces the requirement for protecting the channel between PoP-provider and PoP-evaluator / certification authority to integrity only protection. The same holds for the storage at the PoP-evaluator. The modified first secret has to be stored with integrity only protection. For comparison, a modified second secret HK2 is generated by performing the same one-way-function to the second secret K2 received from the user device 30, and compared with the modified first secret HK1.

The user device 30 receives the ciphertext CT, decapsulates it together with the KEM private key SK resulting a second secret K2, see P26. The user device 30 establishes a secure channel to the PoP-evaluator 32 and sends the second secret K2 attached to the KEM public key PK, see P27. This secure channel should at least provide integrity protection for the KEM public key PK as well as confidentiality and preferably integrity protection for the second secret K2.

The PoP-evaluator 32 receives second secret K2 and the KEM public key PK over the secure channel from the user device 30. It identifies, the previously received K and PK from the PoP-Provider and reads it from the storage. The PoP-evaluator 32 compares the second secret K2 with the first secret K1, see P28. In case of a mismatch, the PoP-evaluator 32 aborts here and does not issue a certificate. Otherwise, the PoP-evaluator 32 ensures that the user device 30 possesses the corresponding KEM private key SK, see 29. Otherwise the user device 31 would not be able to obtain the second secret K2 from the ciphertext CT which equals the first secret K1. Finally, in this case, the PoP-evaluator 32 generates a KEM public key certificate for KEM public key PK and sends it back to the user device 30, integrity protected optionally over the previously established secure channel.

The secure channels between the user device 20, 30 and the PoP-evaluator 22, 32, or between the PoP-provider 21, 31 and the PoP-evaluator 22, 32, can be established based on known protocols like Transport Layer Security TLS or Secure Shell SSH. Alternatively, a KEM specific TLS channel can be used for post quantum secure use-cases. It is also possible to secure this channel based on a pre-shared secret between the PoP-evaluator 32 and the user device 20, 30. Preferably, this channel also provides some binding to a proof-of-identification Pol.

It is recommended to include more information in all messages P2, P6, P8, P13, P21, P23, P24, P27, P30 described in the protocols depicted in Fig.2 and Fig.3 and the description above. E.g., the messages optionally include at least one timestamp or at least one nonces to ensure the freshness. Moreover, the messages include an identity of the corresponding entity that performed at least one of the operations P1, P3-P6, P7, P9-P12 or P20, P22, P24, P26, P28-P29. Communication entities, i.e., the user device, PoP-provider and PoP-evaluator, preferably agree in advanced on the algorithms to be used, e.g., whether a one-way-function, Symmetric algorithms, or KEM shall be used. Accordingly, information about the used cryptographic algorithms is optionally included in the respective messages, e.g., the version of the used hash function. Any other information that could be useful can be also included.

In an embodiment, the requirement for the channel between the PoP-provider 21, 31 and the PoP-evaluator 22, 32 is reduced to integrity-only protection. For that the PoP-provider 21, 31 performs a one-time-function, e.g., a hash function, the first secret K1 resulting from the KEM encapsulation operation, as HK1=Hash(K1). The PoP-provider 21, 31 forwards the hash value together with the KEM public key PK of user device 20, 30 to the PoP-evaluator 22, 32. Since the hash function is a one-way function, this message needs integrity-only protection, which can be achieved for example with a digital signature over the KEM public key PK attached to the hash value HK from the PoP-provider 21, 31. The PoP-evaluator 22, 32 receives both values, verifies the signature, and stores them securely. In this case, user device 20, 30 sends then the decapsulation result K2 in her certificate request message to the PoP-evaluator 22, 32. The PoP-evaluator 22, 32 hashes the second secret K2 and compare this hash result HK2 with the received hash value HK1 from the PoP-provider 21, 31 for the proof of possession.

For all protocols described above, it is possible to also include a Proof-of-Identity Pol in the first message denoted as PoP-Request from user device 20, 30 to the PoP-Provider 21, 31. This enables the PoP-provider 21, 31 to perform some binding of the KEM public key to the identity of the user device. It also allows the PoP-provider 21, 31 to verify the identity (Pol) in addition to the private key possession, which further reduces the effort for the PoP-evaluator 22, 32.

A computer program product comprising instructions which, when the program is executed by at least one computer, cause the at least one computer to carry out the method as described above. A computer-readable medium having stored there on the computer program product.

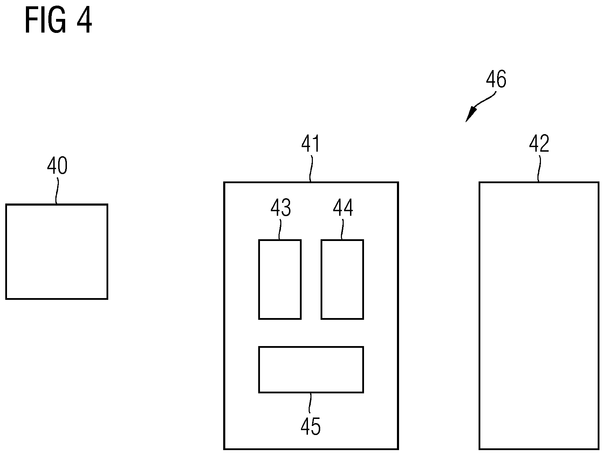

Fig. 4 illustrates an embodiment of the system 46, comprising a user device 40, a PoP-provider 41 and a PoP-evaluator 42. The PoP-provider 41 comprises at least one processor which is configured as an input unit 43, a generator unit 44 and an output unit 45.

The input unit 43 is configured to receive a KEM public key PK of a key pair consisting of a KEM public key PK and a KEM private key SK generated by the user device 40. The generator unit 44 is configured to generate a first secret K1 and a ciphertext data structure CT by performing an KEM encapsulation operation using the KEM public key PK as input. The output unit 45 is configured to transfer the first secret K1 to the PoP-evaluator or a modified first secret HK1 via the user device to the PoP-evaluator and transferring the ciphertext data structure CT to the user device.

Throughout this document the "ciphertext data structure" CT is synonymously used with the expression "ciphertext data" or short "ciphertext".

Summarized, the described approach introduces a new entity, called PoP-provider 21, 31, 41, which assists a certificate authority and more detailed an PoP-evaluator integrated or assigned to the certificate authority in the proof of KEM private keys that is needed, e.g., for the issuance of KEM public key certificates.

Known solutions requires the certificate authority to directly proof the possession of KEM private keys, which needs more effort for KEMs compared with digital signature. Compared with the proposed concepts, the PoP-provider relieves the certificate authority from significant effort and simplifies the proof of KEM private key possessions and, optionally, proof of identities Pol towards the certificate authority.

Multiple protocols and variants are provided, which target on reducing the interactions with the certificate authority or the overall computational complexity and requirements.
The user device does not need to generate signatures for the proposed concept. This reduces the complexity in terms of secure storage for the private key and computational power, especially for post-quantum signature operations, which are known to be more (computationally) complex and require higher key sizes.

In the first embodiment, see Fig.2, a single message is sent to the PoP-evaluator and certificate authority respectively as a request to issue a KEM public key certificate, which already includes the proof of private key possession. This is only possible using the introduced new entity PoP-provider and provides similar effort for the certificate authority compared with regular signature public key certificate PoP.

The method could be realized with respect to an attestation procedure instead of a certification request procedure in Fig.2 and Fig.3. In this case entities and functions could be mapped as follows:
User device -> target
PoP-provider -> attester
PoP-evaluator -> verfier
The statement to posses the secret key SK corresponding to the private key PK -> claim
K2 und signed(HK1|PK) -> Evidence
Cert(PK) -> attestation Result

Each entity checking the certificate is a relying party, because it trusts that the target is the only entity possessing and controlling the secret KEM key SK.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Computer-implemented method for an efficient proof-of-possession (PoP) of a private cryptographic key of a key encapsulation mechanism (KEM), comprising the steps:
- Receiving (S1), by a PoP-provider (21, 31, 41) , the KEM public key (PK) of a key pair consisting of a KEM public key (PK) and a KEM private key (SK) generated by the user device, from the user device (20, 30, 40),
- Generating (S2), by the PoP-provider (21, 31, 41), a first secret (K1) and a ciphertext data structure (CT) by performing an KEM encapsulation operation using the KEM public key (PK),
- Generating (S3), by the user device (20, 30, 40), a second secret (K2) by performing a KEM decapsulation operation using the KEM private key (SK) and the ciphertext data (CT) received from the PoP-provider (21, 31, 41),
- Confirming (S4) proof-of-possession of the KEM private key (SK) in the user device (20, 30, 40), by the PoP-evaluator (22, 32, 42), if the second secret (K2) generated by the user device (20, 30, 40) corresponds with the first secret (K1) generated by the PoP-provider (21, 31, 41).

2. Computer-implemented method according to any of the preceding claims, wherein performing a proof-of-identity (Pol) by checking an identity of the (Id) user device (20, 30, 40) in the PoP-provider (21, 31, 41), the identity being sent by the user device (20, 30, 40) preferably together with the Public KEM key (PK).

3. Computer-implemented method according to any of the preceding claims, wherein the second secret (K2) is transferred confidentiality protected and preferably integrity protected from the user device (20, 30, 40) to the PoP-evaluator (22, 32, 42).

4. Computer-implemented method according to any of the preceding claims, wherein the first secret (K1) and the KEM public key (PK) are transferred from the PoP-provider (21, 31, 41) to the PoP-evaluator (22, 32, 42), wherein the first secret (K1) is transferred via a confidentiality protected and preferably integrity protected communication, and wherein the KEM public key is transferred via an integrity protected communication and preferably confidentiality protected communication.

5. Computer-implemented method according to claim 5, wherein the first secret (K1) is stored confidentiality protected and preferably integrity protected by the PoP-evaluator (22, 32, 42) and the KEM public key (PK) is stored integrity protected and preferably confidentiality protected by the PoP-evaluator (22, 32, 42).

6. Computer-implemented method according to claim 1-3, wherein a modified first secret (HK1) is generated by performing a one-way-function on the first secret (K1) by the PoP-provider (21, 31, 41), and the modified first secret (HK1) and the KEM public key (PK) are transferred from the PoP-provider (21, 31, 41) to the PoP-evaluator (22, 32, 42) via an integrity protected communication and preferably confidentiality protected communication.

7. Computer-implemented method according to any of claims 1-3, wherein a modified first secret (HK1) is generated by performing a one-way-function on the first secret (K1) by the PoP-provider (21, 31, 41), and a modified second secret (HK2) is generated by performing the one-way-function on the received second secret (K2) by the PoP-evaluator (22, 32, 42), wherein the second secret (K2) corresponds with the first secret (K1) if the second modified secret (HK2) corresponds to the first modified secret (HK1) .

8. Computer-implemented method according to claim 7, wherein the modified first secret (HK1) is signed by the PoP-provider (21, 31, 41) and transferred from the PoP-provider (21, 31, 41) via the user device to the PoP-evaluator (22, 32, 42).

9. Computer-implemented method according to claim 8, wherein the KEM public key (PK) is attached to the modified first secret (HK1).

10. Computer-implemented cryptographic method comprising the step of proof-of-possession (PoP) performed according to one of the preceding claims.

11. Computer-implemented cryptographic method according to claim 10, wherein the cryptographic method is a certification request procedure.

12. System comprising a PoP-provider (21, 31, 41) and a PoP-evaluator (22, 32, 42), each of them comprising at least one processor, which are configured to perform the method steps of claims 1-11.

13. PoP-provider (21, 31, 41) comprising at least one processor configured to perform the steps:
- Receiving, from the user device, the KEM public key (PK) of a key pair consisting of a KEM public key (PK) and a KEM private key (SK) generated by a user device (20, 30, 40),
- Generating a first secret (K1) and a ciphertext data structure (CT) by performing an KEM encapsulation operation using the KEM public key (PK) as input,
- Transferring the first secret (K1) to the PoP-evaluator or a modified first secret (HK1) via the user device (20, 30, 40) to the PoP-evaluator (21, 31, 41) and transferring the ciphertext data structure (CT) to the user device (20, 30, 40).

14. A computer program product comprising instructions which, when the program is executed by at least one computer, cause the at least one computer to carry out the method of claim 1-11.

15. A computer-readable medium having stored there on the computer program product of claim 14.
